# EUROPEAN PATENT APPLICATION

(11) **EP 3 542 877 A1**
(43) Date of publication of application: **25.09.2019**
(21) Application number: 18305306.5
(22) Date of filing: 20.03.2018
(51) Int. Cl.: A63F 13/5258, A63F 13/847, A63F 13/537, G06T 19/00

(54) **OPTIMIZED CONTENT SHARING INTERACTION USING A MIXED REALITY ENVIRONMENT**

(71) Applicant: InterDigital CE Patent Holdings, 75017 Paris (FR)
(72) Inventor: SERVANT, Fabien, 35576 Cesson-Sévigné (FR); JOUET, Pierrick, 35576 Cesson-Sévigné (FR); ALLEAUME, Vincent, 35576 Cesson-Sévigné (FR)
(74) Representative: Huchet, Anne

(57) **Abstract**

A device and method is provided for establishing via a processor a common interacting area. The common interacting area is based on the intersection of field of view of a first user device and a second user device. The processor also establishes a border area inside the common interacting area. Any image appearing within the common interacting area that has any portion of it falling within the border area is modified by the processor. The image itself includes a real component and a computer generated component. A system, user interface and method is provided for.

## Description

### TECHNICAL FIELD

The present invention relates generally to user interfaces and in particular to Virtual Reality (VR) or Augmented Reality (AR) user interfaces allowing with multi-viewing capabilities.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In recent years, immersive experiences created by Virtual Reality (VR), Mixed Reality (MR) and Augmented Reality (AR) devices, have become the subject of increased attention. This is because VR/MR/AR can be used practically in every field to perform various functions including testing, entertaining, training, and teaching. For example, engineers and architects can use VR/MR/AR in modelling of new designs. Doctors can use VR/MR/AR technologies to practice and perfect difficult operations ahead of time and military experts can develop strategies by simulating battlefield operations. VR/MR/AR is also used extensively in the gaming and entertainment industries to provide interactive experiences and enhance audience enjoyment. The use of VR/MR/AR applications enables the creation of a simulated environment that feels real and can accurately duplicate experiences in real or imaginary worlds.

In many Augmented Reality (AR) applications, there is a live view of a real-world environment whose elements are augmented by computer-generated (CG) content, such as video or graphics. In Mixed Reality (MR) applications, the CG content is not just overlaid on the top of the view of the real world, but it really interacts with the real-world environment, and digital and physical realities seamlessly blend together. The CG content can be animated, in this case we use the term of CG effects, the animation can be predefined (controlled trajectory) or random (powered by a physical engine).

In AR/MR applications, the visual CG content is inserted in the real-world view at a given location. This location is generally either defined relatively to a predefined visual 2D/3D pattern (ex: industrial applications), pre-determined by spatial coordinates (especially in outdoor location-based applications) or screen coordinates, or manually chosen by the user (such as dynamic interactive applications). The scale of the CG content can be predetermined or defined with respect to the size of the visual pattern. However, in many applications especially those taking place in uncontrolled complex environments, the optimal location and scale depends on the real-world environment and cannot be fully specified in advance. Unfortunately, this leads to many problems when interacting with the geometry and appearance of virtual objects which can potentially destroy the purpose of the application itself. Multiplayer and shared environments should be able to embrace uncontrolled environments by incorporating elements with live geometry used in the VR/MR/AR applications.

### SUMMARY

A device and method is provided for establishing via a processor a common interacting area based on intersection of field of views of a first user device and a second user device. A border area is then established inside the common interacting area. The processor then modifies any object appearing within said common interacting area when any portion of the image falls within said border area; wherein said image includes a real component and a computer generated component.

Additional features and advantages are realized through similar techniques and other embodiments and aspects are described in detail herein and are considered a part of the claimed invention. For a better understanding of the invention with advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 schematically represents a functional overview of a system according one or more embodiments of the disclosure;
Figure 2 schematically represents a system, according to one embodiment;
Figure 3 schematically represents a system, according to another embodiment;
Figure 4 schematically represents a system, according to another embodiment;
Figure 5 schematically represents a system, according to another embodiment;
Figure 6 schematically represents a system, according to another embodiment
Figure 7 schematically represents a system, according to another embodiment;
Figure 8 schematically represents a system according to another embodiment,
Figure 9 schematically represents a system according to another embodiment,
Figure 10 schematically represents an immersive video rendering device according to an embodiment,
Figure 11 schematically represents an immersive video rendering device according to another embodiment,
Figure 12 schematically represents an immersive video rendering device according to another embodiment,
Figure 13 schematically represents a pin hole model of a field of view of a user according to one example associated with one embodiment;
Figure 14 provides an example of a plurality of user displays according to one embodiment;
Figure 15 provides illustration of common interacting areas of a plurality of users according to one embodiment; and
Figure 16 is a flow chart representation of a methodology according to one embodiment.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

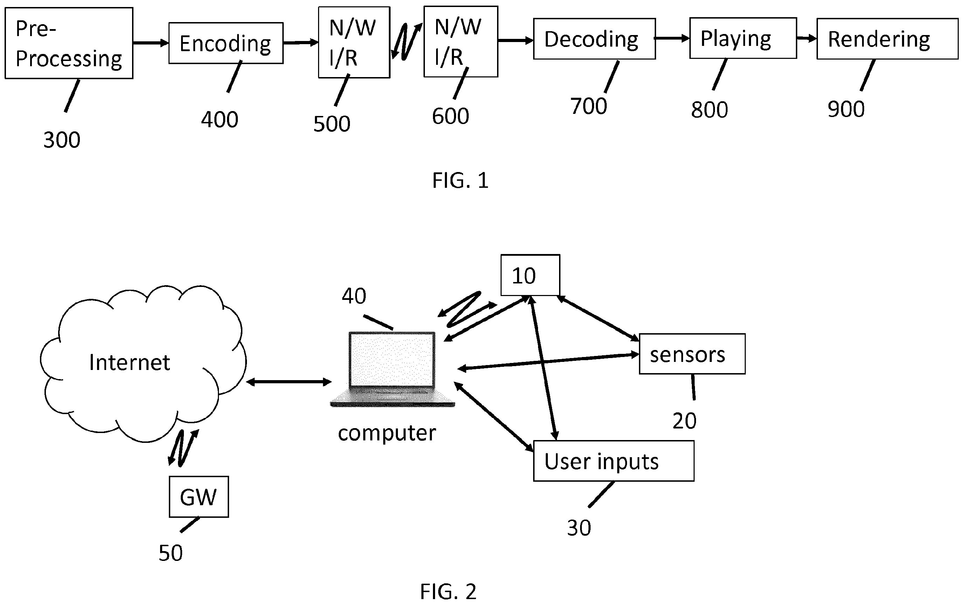

Figure 1 schematically illustrates a general overview of an encoding and decoding system according to one or more embodiments. The system of Figure 1 is configured to perform one or more functions. A pre-processing module 300 may be provided to prepare the content for encoding by an encoding device 400. The pre-processing module 300 may perform multi-image acquisition, merging of the acquired multiple images in a common space (for example, a 3D sphere from which the direction to each pixel is encoded, by a mapping into a 2D frame using, for example, but not limited to, an equirectangular mapping or a cube mapping). The pre-processing module 300 might instead acquire an omnidirectional video in a particular format (for example, equi-rectangular) as input, and pre-process the video to change the mapping into a format more suitable for encoding. Depending on the acquired video data representation, the pre-processing module 300 may perform a mapping space change. Some systems have the user provide his point of view and the characteristics of his AR device to allow the service provider to compute the resulting image Another implementation might combine the multiple images into a common space having a point cloud representation. Encoding device 400 packages the content in a form suitable for transmission and/or storage for recovery by a compatible decoding device 700. In general, though not strictly required, the encoding device 400 provides a degree of compression, allowing the common space to be represented more efficiently (i.e., using less memory for storage and/or less bandwidth required for transmission). In the case of a 3D sphere mapped onto a 2D frame, the 2D frame is effectively an image that can be encoded by any of a number of image (or video) codecs. In the case of a common space having a point cloud representation, the encoding device 400 may provide point cloud compression, which is well known, (e.g., by octree decomposition and the are some formats to encode 3D scene (obj, fbx, vrml).) After being encoded, the data, which may be encoded immersive video data or 3D CGI encoded data for instance, are sent to a network interface 500, which may be typically implemented in any network interface, for instance present in a gateway. The data are then transmitted through a communication network 550, such as internet but any other network may be foreseen. Then the data are received via network interface 600. Network interface 600 may be implemented in a gateway, in a television, in a set-top box, in a head mounted display (HMD) device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. In some AR/MR applications, the visual CG content is inserted in the real-world view (user side). The decoding device 700 and the player 800 may be integrated in a single device (e.g., a smartphone, a game console, a STB, a tablet, a computer, etc.). In another embodiment, the player 800 may be integrated in the rendering device 900.

Various types of systems may be used to perform functions of an immersive display device, for rendering an immersive video or an interactive immersive experience (e.g., a VR game). Embodiments of a system, for processing augmented reality (AR) or virtual reality (VR) content are illustrated in figures 2 to 9. Such systems are provided with one or more processing functions, and include an immersive video rendering device which may comprise a head-mounted display (HMD), a tablet, or a smartphone for example, and may optionally include one or more sensors. The immersive video rendering device may also include interface modules between the display device and one or more modules performing the processing functions. The presentation processing functions may be integrated into the immersive video rendering device or performed by one or more processing devices. Such a processing device may include one or more processors and a communication interface with the immersive video rendering device, such as a wireless or wired communication interface.

The processing device may also include a communication interface (e.g., 600) with a wide access network such as internet and access content located on a cloud, directly or through a network device such as a home or a local gateway. The processing device may also access a local storage device (not shown) through an interface such as a local access network interface (not shown), for example an Ethernet type interface. In an embodiment, the processing device may be provided in a computer system having one or more processing units. In another embodiment, the processing device may be provided in a smartphone which can be connected by a wired link or a wireless link to the video to change the mapping into a format more suitable for encoding. Depending on the acquired video data representation, the pre-processing module 300 may perform a mapping space change. After being encoded, the data, which may be encoded immersive video data, or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

An "immersive content" often refers to a video or other streamed content or images, commonly encoded as a rectangular frame that is a two-dimension array of pixels (i.e., element of color information) like a "regular" video or other form of image content. In many implementations, the following processes may be performed for presentation of that immersive content. To be rendered, the two-dimensional frame is, first, mapped on the inner face of a convex volume, also referred to as mapping surface (e.g. a sphere, a cube, a pyramid), and, second, a part of this volume is captured by a virtual camera. Images captured by the virtual camera are displayed by the screen of the immersive display device. In some embodiments, stereoscopic video is provided and decoding results in one or two rectangular frames, which can be projected onto two mapping surfaces, one for each of the user's eyes, a portion of which are captured by two virtual cameras according to the characteristics of the display device.

Pixels in the content appear to the virtual camera(s) according to a mapping function from the frame. The mapping function depends on the geometry of the mapping surface. For a same mapping surface (e.g., a cube), various mapping functions are possible. For example, the faces of a cube may be structured according to different layouts within the frame surface. A sphere may be mapped according to an equirectangular projection or to a gnomonic projection for example. The organization of pixels resulting from the selected projection function may modify or break line continuities, orthonormal local frame, pixel densities and may introduce periodicity in time and space. These are typical features that are used to encode and decode videos.

In another embodiment, the system includes an auxiliary device which communicates with the immersive video rendering device and with the processing device. In such an embodiment, the auxiliary device may perform at least one of the processing functions. The immersive video rendering device may include one or more displays. The device may employ optics such as lenses in front of each display. The display may also be a part of the immersive display device such as for example in the case of smartphones or tablets. In another embodiment, displays and optics may be embedded in a helmet, in glasses, or in a wearable visor. The immersive video rendering device may also include one or more sensors, as described later, for use in the rendering. The immersive video rendering device may also include interfaces or connectors. It may include one or more wireless modules in order to communicate with sensors, processing functions, handheld or devices or sensors related to other body parts.

When the processing functions are performed by the immersive video rendering device, the immersive video rendering device can be provided with an interface to a network directly or through a gateway to receive and/or transmit content.

The immersive video rendering device may also include processing functions executed by one or more processors and configured to decode content or to process content. By processing content here, it is understood functions for preparing content for display. This may include, for instance, decoding content, merging content before displaying it and modifying the content according to the display device.

One function of an immersive content rendering device is to control a virtual camera which captures at least a part of the content structured as a virtual volume. The system may include one or more pose tracking sensors which totally or partially track the user's pose, for example, the pose of the user's head, in order to process the pose of the virtual camera. One or more positioning sensors may be provided to track the displacement of the user. The system may also include other sensors related to the environment for example to measure lighting, temperature or sound conditions. Such sensors may also be related to the body of a user, for instance, to detect or measure sweating or heart rate. Information acquired through these sensors may be used to process the content. The system may also include user input devices (e.g. a mouse, a keyboard, a remote control, a joystick). Information from user input devices may be used to process the content, manage user interfaces or to control the pose of the virtual camera (or an actual camera). Sensors and user input devices communicate with the processing device and/or with the immersive rendering device through wired or wireless communication interfaces.

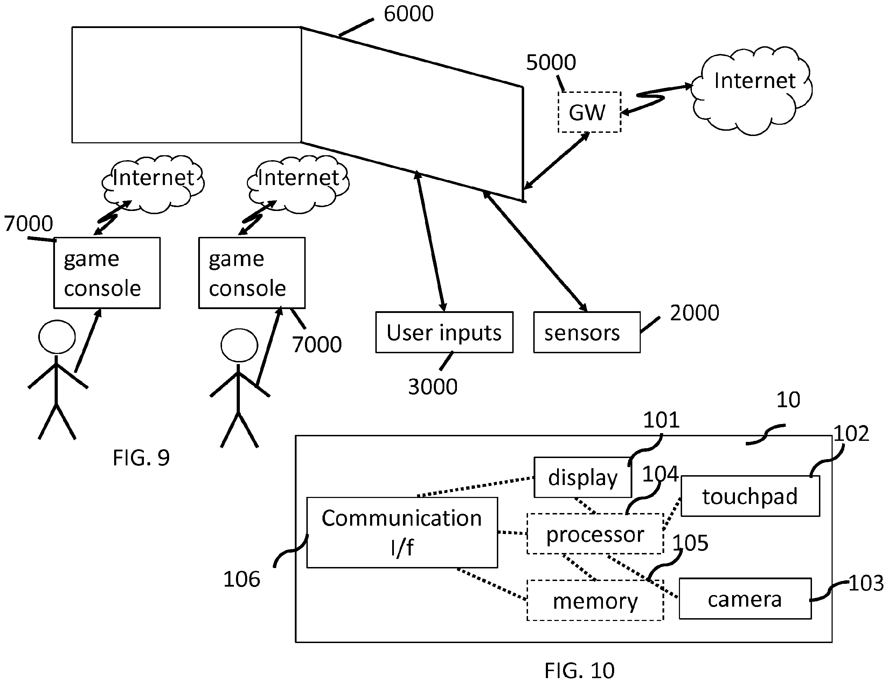

An embodiment of the immersive video rendering device 10, will be described in more detail with reference to Figure 10. The immersive video rendering device includes a display 101. The display is, for example an OLED or LCD type display or device like Hololens. The immersive video rendering device 10 is, for instance a HMD, a tablet, or a smartphone. The device 10 may include a touch sensitive surface 102 (e.g. a touchpad or a tactile screen), a camera 103, a memory 105 in connection with at least one processor 104 and at least one communication interface 106. The at least one processor 104 processes the signals received from the sensor(s) 20 (Figure 2). Some of the measurements from sensors are used to compute the pose of the device and to control the virtual camera. Sensors which may be used for pose estimation include, for instance, gyroscopes, accelerometers or compasses. In more complex systems, a rig of cameras for example may also be used. The at least one processor 104 performs image processing to estimate the pose of the device 10. Some other measurements may be used to process the content according to environmental conditions or user reactions. Sensors used for detecting environment and user conditions include, for instance, one or more microphones, light sensor or contact sensors. More complex systems may also be used such as, for example, a video camera tracking eyes of a user. In such a case the at least one processor performs image processing to perform the expected measurement. Data from sensor(s) 20 and user input device(s) 30 may also be transmitted to the computer 40 which will process the data according to the input of the sensors.

Memory 105 includes parameters and code program instructions for the processor 104. Memory 105 may also include parameters received from the sensor(s) 20 and user input device(s) 30. Communication interface 106 enables the immersive video rendering device to communicate with the computer 40 Figure 2). The Communication interface 106 of the processing device may include a wireline interface (for example a bus interface, a wide area network interface, a local area network interface) or a wireless interface (such as a IEEE 802.11 interface or a Bluetooth® interface). Computer 40 sends data and optionally control commands to the immersive video rendering device 10. The computer 40 processes the data, for example to prepare the data for display by the immersive video rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example. decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

Embodiments of a first type of system for displaying augmented reality, virtual reality, augmented reality (also mixed reality) or any content from augmented reality to virtual reality will be described with reference to Figures 2 to 6. In one embodiment, these are combined with a large field-of-view content that can provide up to a 360 degree view of a real, fictional or mixed environment. This large field-of-view content may be, among others, a three-dimension computer graphic imagery scene (3D CGI scene), a point cloud, streaming content or an immersive video or panoramic picture or images. Many terms may be used to define technology that provides such content or videos such as for example Virtual Reality (VR), Augmented Reality (AR) 360, panoramic, 4π, steradians, omnidirectional, immersive and alongside large-field- of-view as previously indicated.

Figure 2 schematically illustrates an embodiment of a system configured to decode, process and render immersive videos. The system includes an immersive video rendering device 10, one or more sensors 20, one or more user input devices 30, a computer 40 and a gateway 50 (optional).

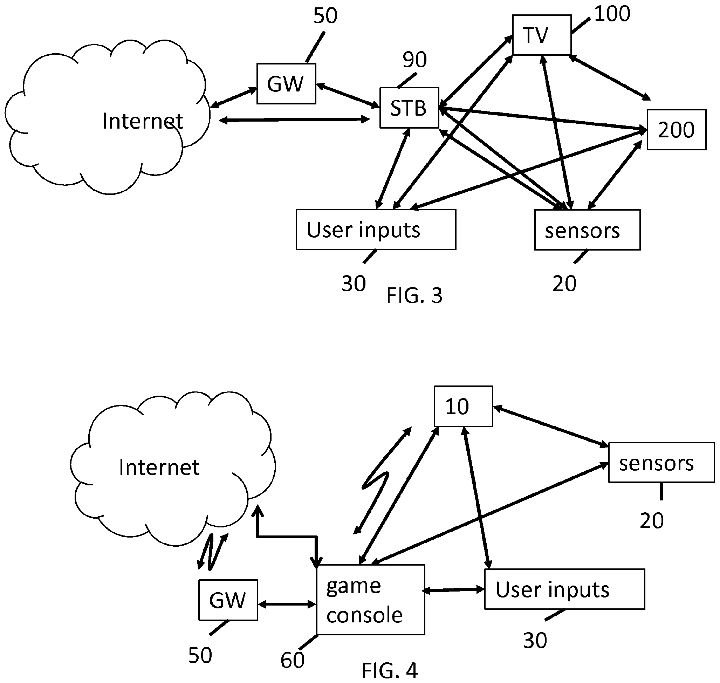

Figure 3 schematically represents a second embodiment of a system configured to decode, process and render immersive videos. In this embodiment, an STB 90 is connected to a network such as internet directly (i.e. the STB 90 includes a network interface) or via a gateway 50. The STB 90 is connected through a wireless interface or through a wired interface to a rendering device such as a television set 100 or an immersive video rendering device 200. In addition to classic functions of an STB, STB 90 includes processing functions to process video content for rendering on the television 100 or on any immersive video rendering device 200. These processing functions are similar to the processing functions described for computer 40 and are not described again here. Sensor(s) 20 and user input device(s) 30 are also of the same type as the sensor(s) and input device(s) described earlier with reference to Figure 2. The STB 90 obtains the data representative of the immersive video from the internet. In another embodiment, the STB 90 obtains the data representative of the immersive video from a local storage (not represented) where the data representative of the immersive video are stored.

Figure 4 schematically represents a third embodiment of a system configured to decode, process and render immersive videos. In the third embodiment a game console 60 processes the content data. Game console 60 sends data and optionally control commands to the immersive video rendering device 10. The game console 60 is configured to process data representative of an immersive video and to send the processed data to the immersive video rendering device 10 for display. Processing may be done exclusively by the game console 60 or part of the processing may be done by the immersive video rendering device 10.

The game console 60 is connected to internet, either directly or through a gateway or network interface 50. The game console 60 obtains the data representative of the immersive video from the internet. In another embodiment, the game console 60 obtains the rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example. decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

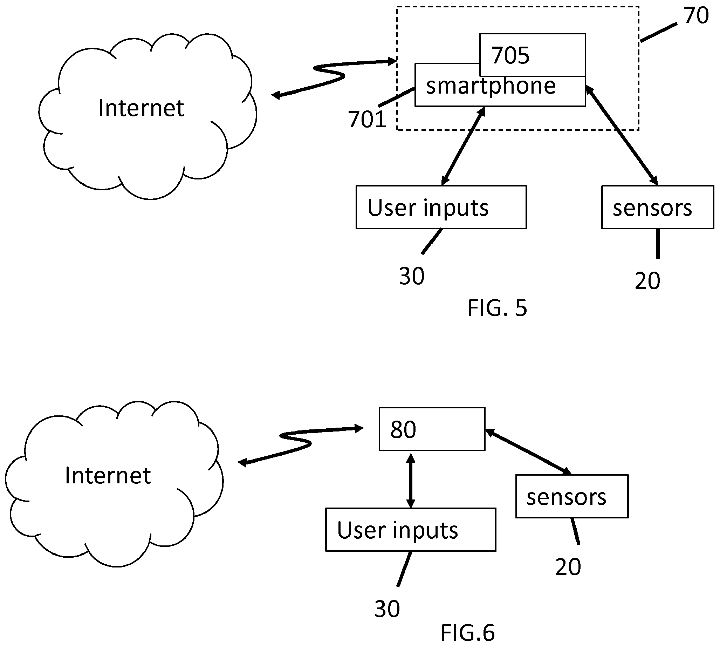

Figure 5 schematically represents a fourth embodiment of a system configured to decode, process and render immersive videos the immersive video rendering device 70 is provided by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage may be on the smartphone 701 or on a local server accessible through a local area network for instance (not represented).

Figure 6 schematically represents a fifth embodiment of the first type of system in which the immersive video rendering device 80 includes functionalities for processing and displaying the data content. The system includes an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to Internet and thus may obtain data representative of an immersive video from the internet. In another embodiment, the immersive video rendering device 80 obtains data representative of an immersive video from a local storage (not represented) where the data representative of an immersive video are stored, said local storage may be provided on the rendering device 80 or on a local server accessible through a local area network for instance (not represented).

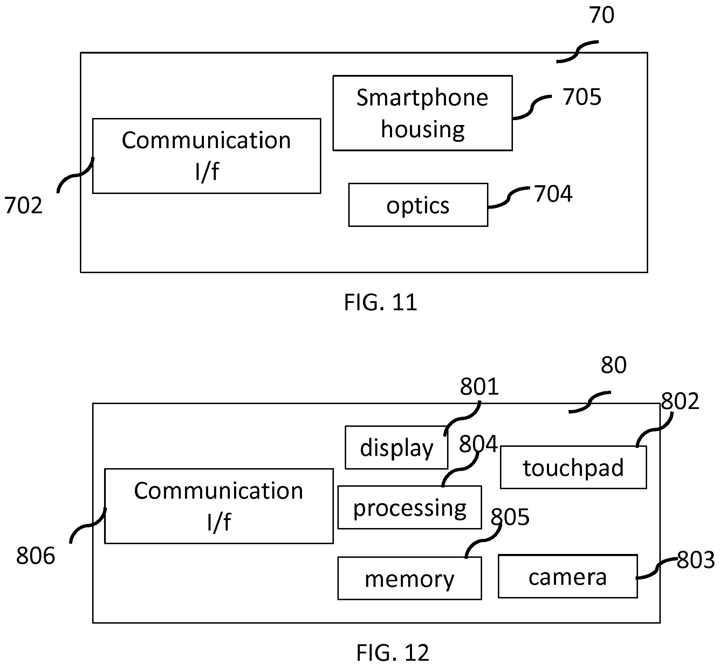

An embodiment, of an immersive video rendering device 80 is illustrated in Figure 12. The immersive video rendering device includes a display 801, for example an OLED or LCD type display, a touchpad (optional) 802, a camera (optional) 803, a memory 805 in connection with at least one processor 804 and at least one communication interface 806. Memory 805 includes parameters and code program instructions for the processor 804. Memory 805 may also include parameters received from the sensors 20 and user input devices 30. Memory 805may have a large enough capacity to store data representative of the immersive video content. Different types of memories may provide such a storage function and include one or more storage devices such as a SD card, a hard disk, a volatile or non-volatile memory...) Communication interface 806 enables the immersive video rendering device to communicate with internet network. The processor 804 processes data representative of the video to display images on display 801. The camera 803 captures images of the environment for an image processing step. Data are extracted from this step to control the immersive video rendering device.

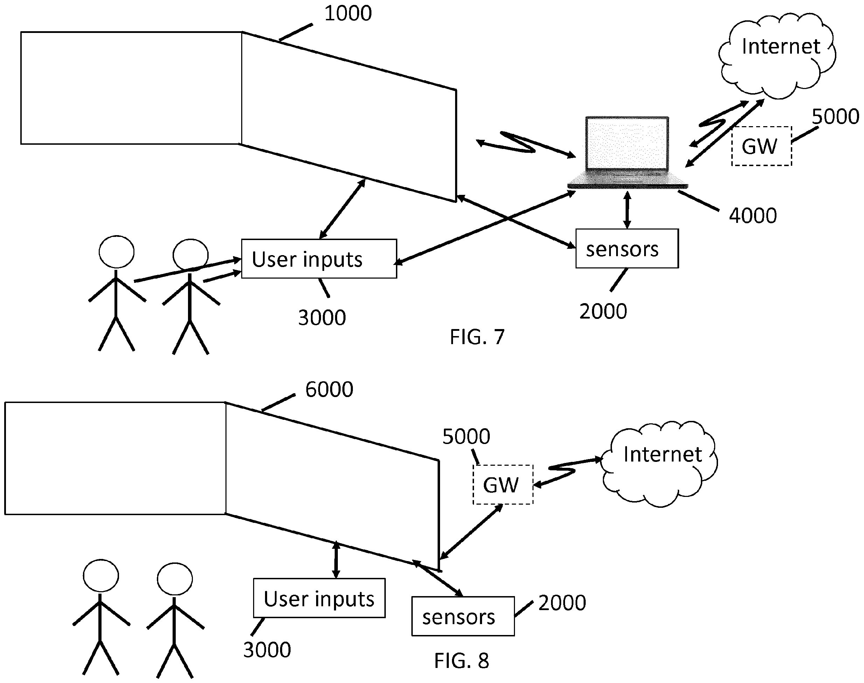

Embodiments of a second type of system, for processing augmented reality, virtual reality, or augmented virtuality content are illustrated in figures 7 to 9. In these embodiments the system includes an immersive wall or CAVE (a recursive acronym for "CAVE Automatic Virtual Environment").

Figure 7 schematically represents an embodiment of the second type of system including a display 1000 - an immersive (projective) wall which receives data from a computer 4000. The computer 4000 may receive immersive video data from the internet. The computer 4000 can be connected to internet, either directly or through a gateway 5000 or network interface. In another embodiment, the immersive video data are obtained by the computer 4000 from a local storage (not represented) where data representative of an immersive video are stored, said local storage may be in the computer 4000 or in a local server accessible through a local area network for instance (not represented).

This system may also include one or more sensors 2000 and one or more user input devices 3000.The immersive wall 1000 may be an OLED or LCD type, or a projection display, and may be equipped with one or more cameras (not shown). The immersive wall 1000 may process data received from the more or more sensors 2000. The data received from the sensor(s) 2000 may, for example, be related to lighting conditions, temperature, environment of the user, e.g., the position of objects, and the position of a user. In some cases, the imagery presented by immersive wall 1000 may be dependent upon the position of a user, for example to adjust the parallax in the presentation.

The immersive wall 1000 may also process data received from the one or more user input devices 3000. The user input device(s) 3000 may send data such as haptic signals in order to give feedback on the user emotions. Examples of user input devices 3000 include for example handheld devices such as smartphones, remote controls, and devices with gyroscope functions.

Data may also be transmitted from sensor(s) 2000 and user input device(s) 3000 data to the computer 4000. The computer 4000 may process the video data (e.g. decoding them and preparing them for display) according to the data received from these sensors/user input devices. The sensors signals may be received through a communication interface of the immersive wall. This communication interface may be of Bluetooth type, of WIFI type or any other type of connection, preferentially wireless but may also be a wired connection.

Computer 4000 sends the processed data and, optionally, control commands to the immersive wall 1000. The computer 4000 is configured to process the data, for example prepare the data for display by the immersive wall 1000. Processing may be done exclusively by the computer 4000 or part of the processing may be done by the computer 4000 and part by the immersive wall 1000.

Figure 8 schematically represents another embodiment of the second type of system. The system includes an immersive (projective) wall 6000 which is configured to process (for example decode and prepare data for display) and display the video content and further includes one or more sensors 2000, and one or more user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

This system may also include one or more sensors 2000 and one or more user input devices 3000.The immersive wall 6000 may be of OLED or LCD type and be equipped with one or more cameras. The immersive wall 6000 may process data received from the sensor(s) 2000 (or the plurality of sensors 2000). The data received from the sensor(s) 2000 may for example be related to lighting conditions, temperature, environment of the user, such as position of objects.

The immersive wall 6000 may also process data received from the user input device(s) 3000. The user input device(s) 3000 send data such as haptic signals in order to give feedback on the user emotions. Examples of user input devices 3000 include for example handheld devices such as smartphones, remote controls, and devices with gyroscope functions.

The immersive wall 6000 may process the video data (e.g. decoding them and preparing them for display) according to the data received from these sensor(s)/user input device(s). The sensor signals may be received through a communication interface of the immersive wall. This communication interface may include a Bluetooth® type, a WIFI type or any other type of wireless connection, or any type of wired connection. The immersive wall 6000 may include at least one communication interface to communicate with the sensor(s) and with the internet.

Figure 9 illustrates another embodiment in which an immersive wall is used for gaming. One or more gaming consoles 7000 are connected, for example through a wireless interface to the immersive wall 6000. The immersive wall 6000 receives immersive video data from the internet through a gateway 5000 or directly from internet. In an alternative embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

Gaming console 7000 sends instructions and user input parameters to the immersive wall 6000. Immersive wall 6000 processes the immersive video content, for example, according to input data received from sensor(s) 2000 and user input device(s) 3000 and gaming console(s) 7000 in order to prepare the content for display. The immersive wall 6000 may also include internal memory to store the content to be displayed.

In a VR/MR/AR environment, there is content surrounding the user wearing a head-mounted display. However, at the same time, it is very easy for the user to miss interesting or exciting events if the user is looking in the wrong direction. This problem also exists when the user is viewing 360° video content on a TV or screen-based computing device. It is desired to provide a user a physical remote to pan the view space by varying degrees so that content corresponding to different angles can be provided. Since most prior art cannot provide such content, an issue arises in a number of applications. In addition, even when content can be provided accordingly, it will be desirable to bring attention of the user to crucial information that the user may miss due to inattention.

As stated previously, in MR environments, the CG content is not just overlaid on the top of the view of the real world, but it really interacts with the real-world environment, and digital and physical realities seamlessly blend together. Consequently, one of the problems facing AR/MR/VR applications is when they face an uncontrolled complex environment. in applications taking place in an uncontrolled complex environments, the optimal location and scale depends on the real-world environment and cannot be fully specified in advance. For instance, for inserting virtual objects in Mixed Reality in a user's living room, it is necessary to understand and analyze the layout of the real scene, but also its radiometry, the geometry and appearance of the virtual objects, the user position, and the purpose of the application itself.

In many cases, a rendering display is mandatory to display the virtual scene superimposed to the view of the real-world environment. The display can be part of a wearable device, a television or set top box, a computer or other such devices as can be appreciated by those skilled in the art. In some scenarios, for example in the case where Mixed Reality is built around the content stream of a TV, a second screen may have to be used to display the CG content. This secondary screen can be a tablet or a see-through device or other devices as can be appreciated by those skilled in the art. It is also possible to use more than two screens in other alternative embodiments.

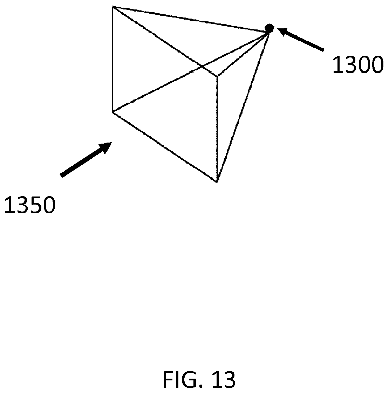

In some scenarios, the user can potentially interact with the CG content. Depending of the implementation, there are different types of interaction such as scaling, removing, adding, moving or modifying objects to name a few. Figures 13 to 16 provides different embodiments displaying VR/MR/AR user interfaces and systems that address the problems caused by variety of such interactions when, especially in multiuser environments. In one embodiment, as will be discussed presently, for example a solution is provided that clips some result of interaction to allow for an optimal experience. For this, a common 3D area (bounding boxes) is defined in which the CG content will be located. When the CG element is close to the border of the 3D area, the clipping effect is used to control and define the interaction for optimal results. In this way, when a first user interacts with a CG content, other user(s) can keep the CG content in their field of view. Ultimately, this can contribute to an increased level of collaboration between multiple users and enhance the VR/MR/AR experiences as a whole.

For ease of understanding one example as how a common area is determined, and a border established around this common area, is provided by the embodiment illustrated in Figure 13. Those skilled in the area, however, appreciate that this is only an example that aids understanding and other approaches can be taken in alternate embodiments. Figure 13, provides a pinhole illustration an of object model with a single field of view. In this example, a pyramid, referenced by numeral 1350, is used to provide the object representation of the pinhole 1300.

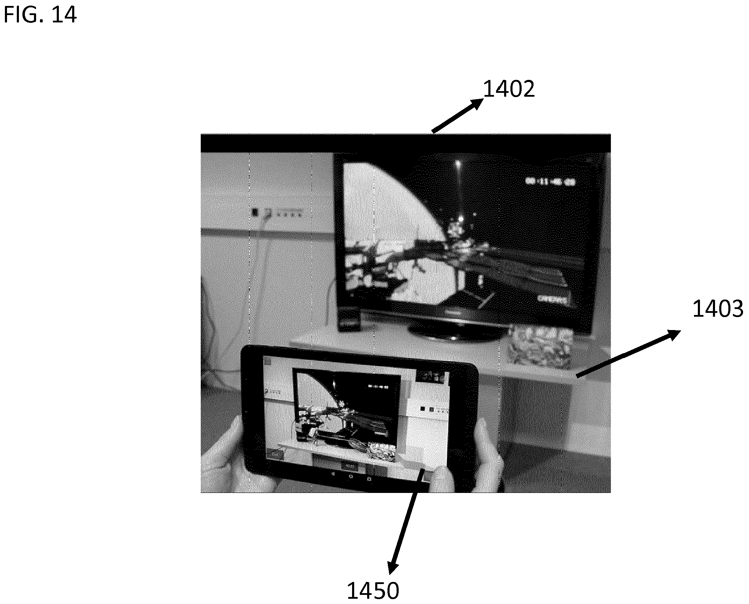

To aid further understanding, an example is introduced where AR/MR application is built around the content displayed by the TV. On the AR device, an astronaut falls from the TV screen, walks on a table, plants a flag and leave the scene using an airlock. Figure 14, provides an illustrative example of such an environment. In this application, the CG content is inserted relatively to a visual pattern. This pattern is defined as the frame reference (world center). In this embodiment, the AR/MR application can be built around the content displayed by the TV. On the AR device, an astronaut falls from the TV screen (referenced as 1402), walks on the table (referenced as 1403), plants a flag and leave the scene using an airlock (not shown). In this application, the CG content is inserted relatively to a visual pattern. This pattern is defined as the frame reference (world center). A first user can then positions himself/herself so that the scene is centered on his/her device (referenced here by numerals 1450) so as to allow the maximum amount of the scene to be visible. At the same time, a second user (not shown) can also position himself/herself so that the scene is centered on his/her device (not shown) based on the second user's field of view.

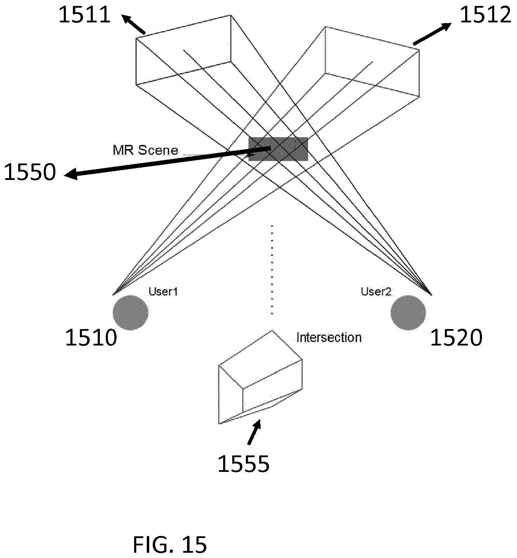

The view of the two users, will intersect as they position their devices each optimally. This results, in one embodiment, in the creation of a 3D common area. One example is shown in Figure 15. To continue with the scenarios already discussed, the two viewers 1510 and 1520 each have an optimal viewing areas respectively referenced as 1511 and 1521 (similar to the pyramid as discussed in Figure 13). The exemplary schematic diagram provided in Figure 15, shows the intersection of these two pyramids 1511 and 1521 which results in the formation of a hexahedron 1550. In one embodiment, to take in account of the small potential displacement of the users 1510 and 1520, and even possibly some small rotation of the AR devices, the hexahedron can be converted to a cuboid (1555) in this example. This cuboid can then be appropriately positioned in a 3D space with respect to the marker (i.e. a frame reference) and a border can then be established around it. In this way, the cuboid is defined as the common 3D area (bounding boxes) in which the CG content will be located. When the CG element is close to the border of this cuboid 3D area, the object is clipped so as to effect and control the interaction.

In an alternate embodiment, the size of the cuboid is extended to take in account of wider displacement (or AR device rotation) as per the application and the circumstances of the device and the users. In yet another alternate embodiment, one of the users can be promoted to obtain the status of a Master user, while all or at least a portion of the other users' (second in this case) interactions may be curtailed and constrained by the first user's field of view (FOV). In yet another embodiment, the position of the cuboid is dynamically updated.

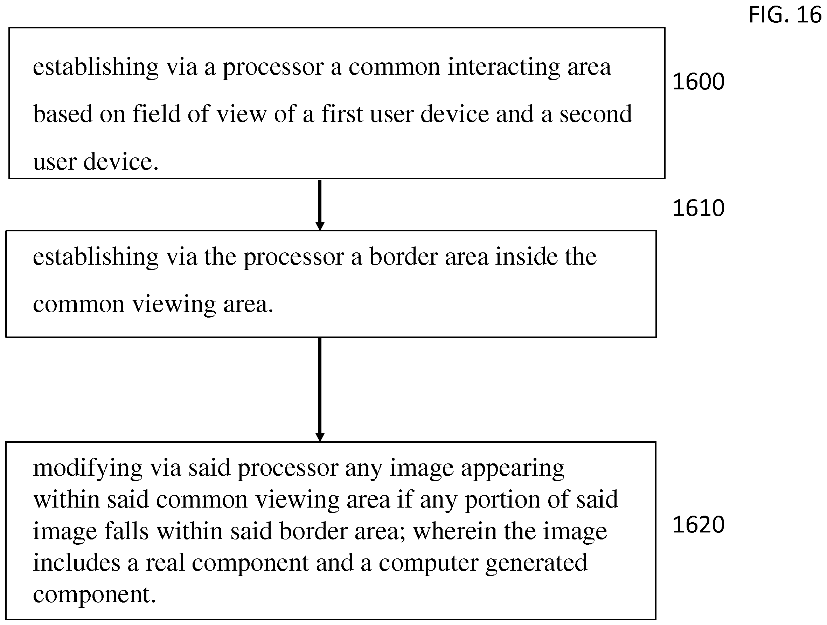

Figure 16 provides for a flowchart illustration of one embodiment of the present invention. In step 1600, a common interacting area is established via a processor based on field of view of a first user device and a second user device. The processor may be included in either user device or be included in a different device in processing communication with the user devices. In step 1610, the processor then establishes a border area inside the common interacting area. In step 1620, the processor then modifies any image that appearing within the common interacting area if any portion of the image falls within said border area. The image itself comprises of a real component and a computer generated component. The computer generated component is generated to interact with the real component to create an effect. Consequently, modifying the image may include a number of modifications including but not limited to repositioning the image, regenerating the computer generated component only, resizing the image or the computer generated component or others as can be appreciated by one skilled in the art.

In an embodiment the processor is included in one of said user devices and the modification includes resizing said object. In another embodiment, the computer generated component is generated by the processor to interact with said real component in order to create a mixed reality effect. The modification includes only modifying the computer generated component. The modification can also include repositioning of at least a portion the object and the common interacting area is further enhanced to allow for a selected displacement associated with at least one of the user devices. In another embodiment, the common interacting area and the border area are modified dynamically every time at least one of the user device field of views are changed more than said selected displacement amount. In one embodiment the displacement also includes rotation of at least one of said user devices. In addition, the common area can be shaped in a variety of manners such as a hexahedron. In one embedment, the hexahedron is encompassed in a cuboid and the size of the cuboid can be changed upon changing the amount of said selected displacement. In yet another embodiment, the position of the cuboid is modified dynamically by said processor every time at least one of the user device field of views are changed more than the preselected amount or upon receiving of a different selected amount. In addition, one of the user devices can be dedicated as a master and given a master status by the processor so that any of said second user device's interactions are constrained by the first user device field of view.

While some embodiments has been described, it will be understood that those skilled in the art, both now and in the future, may make various improvements and enhancements which fall within the scope of the claims which follow. These claims should be construed to maintain the proper protection for the invention first described.

## Claims

1. A method comprising
establishing via a processor a common interacting area (1600) based on intersection of field of views of a first user device and a second user device;
establishing via said processor a border area inside the common interacting area (1610);
modifying (1620) via said processor any object appearing within said common interacting area when any portion of said image falls within said border area; wherein said image includes a real component and a computer generated component.

2. A device comprising
a processor configured to establishing a common interacting area (1600) for at least two user devices; wherein said common interacting area is based on intersection of field of view of each of said two user devices;
said processor determining a border area inside the common interacting area (1610) and modifying any object appearing within said common interacting area when any portion of said object falls within said border; wherein said object includes a real component and a computer generated component.

3. The method of claim 1 or device of claim 2, wherein said processor is included in one of said user devices.

4. The method of claim 1 or 3, or the device of claims 2-3, wherein said modification includes resizing said object.

5. The method of claim 1 or 3 or the device of claims 2-3, wherein said computer generated component is generated by said processor to interact with said real component in order to create a mixed reality effect, and said modification includes only modifying the computer generated component.

6. The method of claim 1 or 3, or the device of claim 2-3, wherein said modification includes repositioning of at least a portion said object.

7. The method of claims 1 or 3-6 or device of claims 2-6, wherein said common interacting area is further enhanced to allow for a selected displacement associated with at least one of said user devices.

8. The method of claim 7 or device of claim 7, wherein said common interacting area and said border area is modified by said processor dynamically every time at least one of said user device field of views are changed more than said selected displacement amount.

9. The method of claims 1, 7 or 8, or the device of claims 2, 7 or 8 wherein said displacement also includes rotation of at least one of said user devices.

10. The method of claims 1, 3 to 9 or device of claims 2 to 9, wherein said common area is shaped as a hexahedron.

11. The method or device of claim 10, wherein said hexahedron is encompassed in a cuboid.

12. The method or device of claim 11, wherein the size of said cuboid can be changed upon changing the amount of said selected displacement.

13. The method of claim 12 or device of claim 12, wherein said position of said cuboid is modified dynamically by said processor every time at least one of said user device field of views are changed more than said preselected amount or upon receiving of a different selected amount.

14. The method of claims 1 and 3-13 or device of claims 2-13 wherein one of said user devices is given a master status by said processor so that any of said second user device's interactions are constrained by said first user device field of view.

15. A non-transitory storage medium carrying instructions of program code for executing steps of the method according to one of claims 1 or 3 to 14, when said program is executed on a computing device.
